# EUROPEAN PATENT APPLICATION

(11) **EP 4 183 929 A1**
(43) Date of publication of application: **24.05.2023**
(21) Application number: 22208484.0
(22) Date of filing: 21.11.2022
(51) Int. Cl.: E01H 4/02

(54) **SNOW TOOTH FOR A SNOW TILLER AND SAID SNOW TILLER FOR THE PREPARATION OF THE SNOW COVER OF THE SKI SLOPES**

(30) Priority: 23.11.2021 IT 202100029603
(71) Applicant: PRINOTH S.p.A., 39049 Vipiteno (BZ) (IT)
(72) Inventor: KIRCHMAIR, Martin, 39049 Vipiteno (BZ) (IT); UNTERHOLZNER, Markus, 39049 Vipiteno (BZ) (IT); INSAM, Mirko, 39049 Vipiteno (BZ) (IT)
(74) Representative: Studio Torta S.p.A.

(57) **Abstract**

A snow tooth for a snow tiller for preparing the snowpack of ski slopes; the snow tooth (3) comprising a first projection (6) having a first height (HI; R1) and a second projection (7) having a second height (H2; R2), the first height (HI; R1) and the second height (HI; Rl); the snow tooth being shaped so as to be connected to a rotating shaft and have, in use, a main direction of rotation (F); preferably, the first projection (6) is arranged along the snow tooth so that, in use, it sinks into the snowpack before the second projection (7) in particular when, in use, the snow tooth is attached to a shaft (2) of the snow tiller (1) and said shaft (2) rotates in the main direction of rotation (F).

## Description

### CROSS-REFERENCE TO RELATED APPLICATIONS

This patent application claims priority from Italian patent application no. 102021000029603 filed on November 23, 2021 the entire disclosure of which is incorporated herein by reference.

### TECHNICAL FIELD

The invention relates to a snow tooth for a snow tiller and to said snow tiller for the preparation of the snowpack of ski slopes.

### BACKGROUND

Document EP 3 071 754 A1 discloses a snow tiller with a plurality of snow teeth.

A tiller of the prior art can have one single rotating shaft, around which the teeth are attached, or it can have two rotating shafts, around which the teeth are attached. The two rotating shafts can be connected to one another by a joint.

### SUMMARY

An object of the invention is to provide a snow tooth for a snow tiller, which offers better performances than the prior art in terms of tilling and/or power consumption and/or use on snowpacks with different features and/or snow processing quality and/or ability to adjust to different snowpacks.

According to the invention, there is provided a snow tooth for a snow tiller for the preparation of the snowpack of ski slopes; the snow tooth comprising a first projection having a first height and a second projection having a second height, the first height and the second height having respective values different between them; the snow tooth being shaped so as to be connected to a rotating shaft and have, in use, a main direction of rotation; preferably, the first projection is arranged along the snow tooth so that, in use, it sinks into the snowpack before the second projection, in particular when, in use, the snow tooth is attached to a shaft of the snow tiller and said shaft rotates in the main direction of rotation.

Thanks to the invention, a tiller is obtained, which ensures better tilling in all snow conditions; in other words, it adapts well to the processing of snow in any condition; furthermore, said tiller has reduced vibrations during tilling and reduced power consumptions needed for snow tilling.

Another object of the invention is to provide a snow tiller capable of overcoming the drawbacks of the prior art.

According to the invention, there is provided a snow tiller comprising a shaft, in use a rotating shaft, preferably having a circular cross-section, in particular an at least partially hollow cross-section; and a plurality of snow teeth according to any one of the preceding claims housed around the shaft and attached thereon and around it.

### BRIEF DESCRIPTION OF THE DRAWINGS

Further features and advantages of the invention will be best understood upon perusal of the following description of non-limiting embodiments thereof, with reference to the accompanying drawing, wherein:
- figure 1 is a perspective view, with some parts removed for greater clarity, of a rotating snow tiller for the preparation of ski slopes according to the invention;
- figure 2 is a perspective view, on a larger scale, of a snow tooth of the snow tiller of figure 1;
- figure 3 is a side view, with parts removed for greater clarity, of the tooth of figure 2;
- figure 4 is a schematic side view, with parts removed for greater clarity, of the tiller of figure 1; and
- figure 5 is a top view, with parts removed for greater clarity, of the tooth of figures 2 and 3.

### DESCRIPTION OF EMBODIMENTS

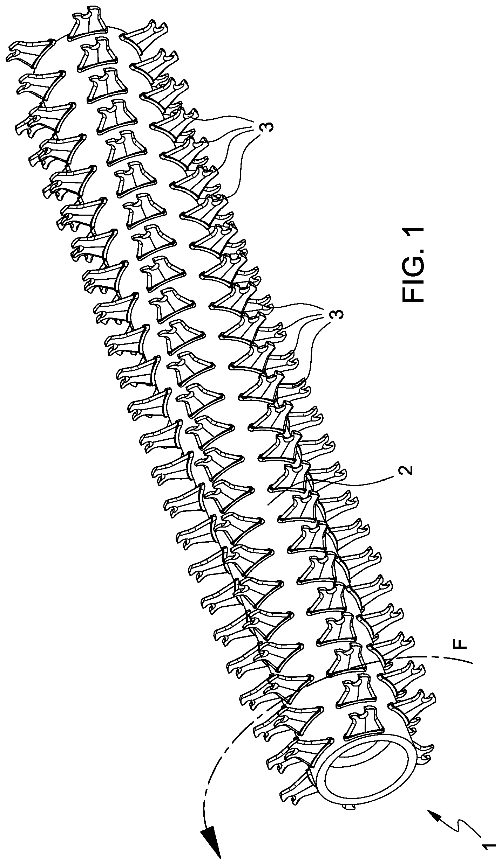

In figure 1, number 1 indicates, as a whole, a snow tiller for the preparation of the snowpack of ski slopes, which is designed to be towed in a moving direction by a snow groomer vehicle, which is not shown in the accompanying drawings.

In other words, in a preferred embodiment, the snow groomer vehicle comprises the tiller mounted in a rear position.

In an optional, non-limiting embodiment of the invention, the snow groomer vehicle can comprise a blade (or shovel) attached at the front of the snow groomer vehicle and/or a winch.

The snow tiller 1 is designed to till a superficial layer of the snowpack and comprises a frame, of which, in figure 1, a rotating shaft 2 is shown, which preferably has the shape of a drum. More in detail, in a preferred, though non-limiting embodiment of the invention, the shaft 2 is at least partially hollow.

The tiller 1 comprises a plurality of snow teeth 3 housed around the shaft 2 and attached thereon and around it.

In the non-limiting embodiment of the invention shown in the accompanying figures, the snow teeth 3 are arranged along the shaft 2 in an angularly staggered manner relative to one another.

With special reference to figure 1 and according to a preferred, though non-limiting embodiment of the invention, the snow teeth 3 are arranged along a row with different angular positions relative to one another; more in detail, the angular position of each tooth 3 is different from the angular position of the adjacent tooth 3 or of the adjacent teeth 3, namely at the front or at the back along the row of teeth. More in detail, each tooth 3 is arranged in an angular position having the same value as the angular position of the preceding tooth plus a delta angular value. In a preferred, though non-limiting embodiment of the invention, the snow teeth 3 of each row are grouped in groups of snow teeth 3, wherein the angular position of the teeth 3 of each group of teeth 3 is the same. More in detail, a group of teeth can comprise any number of teeth greater than 1. In other words, the angular position of the teeth 3 within the group of teeth 3 is the same and each group of teeth 3 has different angular positions than the angular positions of the other groups of teeth 3 of the same row, in particular the angular position increases in a regular manner for each group of teeth 3 moving along the shaft along the rotation axis, in particular along the rotation axis from the right to the left or from the left to the right. It should be pointed out that the different embodiments, which differ from one another in the angular position of the teeth 3, are anyway optional and are not limiting for the invention.

More in detail, in an alternative embodiment, the teeth 3 are angularly staggered in pairs of teeth 3; in other words, two teeth have the same angular position, but are staggered relative to the angular position of the preceding and/or following pair of teeth 3 of the row of teeth 3.

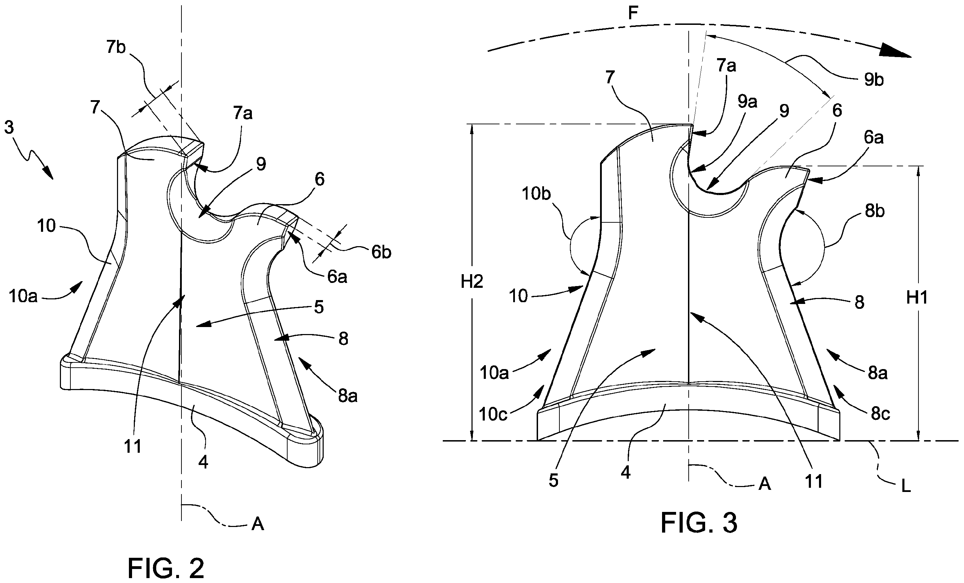

With reference to figure 2, each tooth 3 comprises a base 4, a central body 5, a projection 6 and a projection 7; in particular, the projection 6 and the projection 7 develop from the central body 5. Furthermore, the central body 5 develops from the base 4 along an axis A.

Furthermore, each tooth 3 comprises a cutting portion 8, a cutting portion 9 and a cutting portion 10.

In particular, the cutting portion 8 and the cutting portion 9 are separated by the projection 6.

In particular, the cutting portion 9 and the cutting portion 10 are separated by the projection 7.

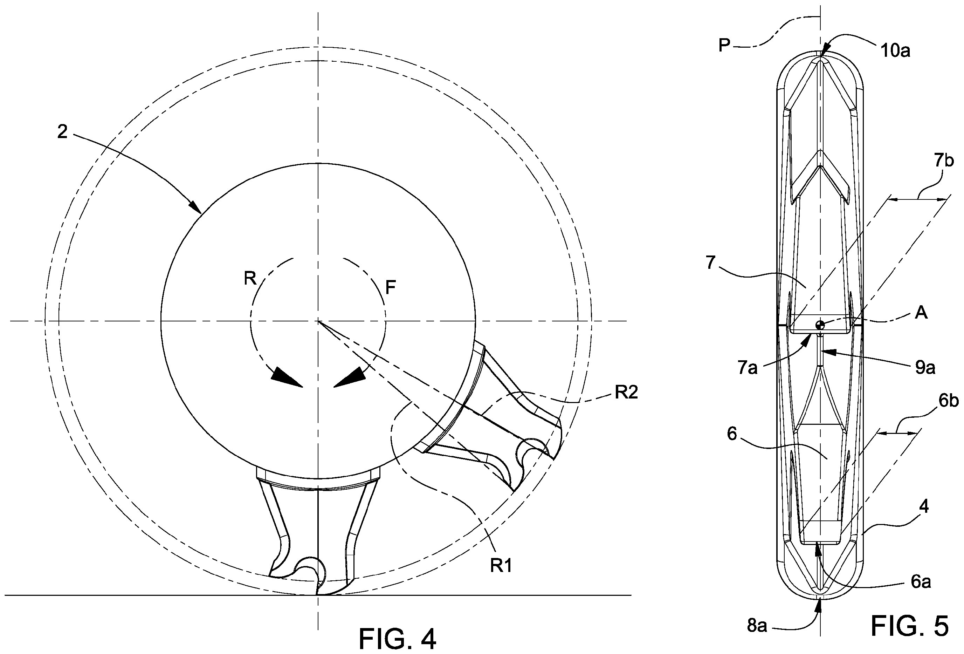

With reference to figure 5, the tooth 3 has a symmetry plane P, which comprises the axis A. In particular, the plane P longitudinally goes through the tooth 3.

Furthermore, the central body 5 is crossed by the plane P and has two cusps 11 on two opposite sides of the plane P (only one of the two cusps 11 being visible in figure 2).

In a preferred, though non-limiting embodiment of the invention, the base 4 has the shape of a segment or portion of a circle, in other words the base 4 describes a segment or a portion of a circle. Thanks to the shape of the base 4, the tooth 3 can be connected to the outer surface of a shaft having circular cross-section.

With reference to figure 3, the projection 6 has a height H1 measured from the base 4 and the projection 7 has a height H2 measured from the base 4. The height H1 has a smaller value than the height H2. In particular, the heights H1 and H2 are measured by a line L, which goes through the two lower ends of the base 4. In particular, the heights H1 and H2 are measured on the plane P from the lower ends of the base 4. The ratio between the height H2 and the height H1 preferably is a value which is greater than 1.0 and smaller than 1.6, in particular greater than 1.1 and smaller than 1.3.

Furthermore, with reference to figure 4, the projection 6 has a radial height R1 measured from the centre of the circle described by the base 4 and the projection 7 has a radial height R2 measured from the centre of the circle described by the base 4. The radial height R1 has a smaller value than the radial height R2. The ratio between the radial height R2 and the radial height R1 preferably is a value which is greater than 1.0 and smaller than 1.3, in particular greater than 1.01 and smaller than 1.2, in particular equal to 1.05.

With reference to figures 2 and 3, the cutting portion 8 has a profile 8a and at least part of said first profile has a curved shape with an angle of curvature 8b. The cutting portion 9 has a profile 9a and at least part of said profile 9a has a curved shape with an angle of curvature 9b. In particular, the angle 8b has a different value than the angle 9b; the ratio between the angle of curvature 8b and the angle of curvature 9b preferably ranges from 3 to 4.9, in particular from 3.7 to 4.2.

The cutting portion 10 has a third profile 10a and at least part of said profile 10a has a curved shape with an angle of curvature 10b. In particular, the angle 8b has a different value than the angle 9b. In particular, the angle 10b has a different value than the angle 9b.

In particular, the angle of curvature 10b has a value which is greater than or equal to the angle of curvature 8b.

In particular, the angle of curvature 10b has a greater value than the angle of curvature 9b.

In particular, the ratio between the angle of curvature 10b and the angle of curvature 8b ranges from 1 to 1.7, in particular from 1 to 1.3.

In particular, the ratio between the angle of curvature 10b and the angle of curvature 9b ranges from 3.5 to 5.2, preferably from 4.1 to 4.6.

Furthermore, the base 4 is curved and is configured, in particular shaped, so as to to be coupled to the shaft 2 of the tiller 1, which has a circular shape, preferably a drum-like shape.

The shaft 2 of the tiller 1, in use, has a main direction of rotation F (figures 1 and 4) and is configured to also rotate in a secondary direction of rotation R, which is contrary to the main direction of rotation F.

The tooth 3 is configured, in particular shaped, so as to operate according to the main direction of rotation F and is configured, in particular shaped, so as to also operate according to a secondary direction of rotation R, which is contrary to the main direction of rotation F.

With reference to figure 4, thanks to the heights H1 and H2 or R1 and R2 of the two projections 6 and 7, in use, when the shaft 2, around which the teeth 3 are connected, rotates in the main direction of rotation F, the projection 6 sinks first and for a smaller depth into the snowpack than the projection 7, this allows for a reduction in power consumptions and/or for smaller oscillations of the shaft 2. Indeed, thanks to the height difference between the projection 6 and the projection 7, a two-step snow processing is obtained; in a first step, a portion of the snowpack up to a first depth is processed and, in a second step, another portion of the snowpack up to a second depth is processed. This leads to a reduction in power consumptions and to a better processing of the snowpack. Furthermore, thanks to the invention, there are less oscillations during snow tilling and the teeth sink into the snow more gradually, since they manage to get into the snowpack more easily as the they penetrate the snow in two steps.

With reference to figures 2, 3 and 5, the profile 8a of the cutting portion 8 has a curved shape facing in the main direction of rotation F.

Furthermore, with reference to figures 2 and 5, the profile 8a of the cutting portion 8 is cusp- or V-shaped.

In other words, the cutting portion 8 forms an edge with a rounded tip coinciding with the plane P.

Furthermore, the cutting portion 8 is symmetrical relative to the plane P.In particular, la cutting portion 8 is facing in the main direction of rotation F.

With reference to figures 2 and 3, the profile 9a of the cutting portion 9 has a curved shape facing in the main direction of rotation F.

With reference to figure 5, the profile 9a describes a cusp or a V.

In other words, the cutting portion 9a forms an edge with a rounded tip coinciding with the plane P.

Moreover, the profile 9a has, along the plane P, a curved shape, in particular a half-moon shape, which extends for a value greater than or equal to 170° and smaller than or equal to 210°, preferably greater than or equal to 180° and smaller than or equal to 200°.

Furthermore, the cutting portion 9 is symmetrical relative to the plane P.

In particular, la cutting portion 9 is facing in the main direction of rotation F.

In particular, the cutting portion 8 and the cutting portion 9 have the same orientation with respect to the main direction of rotation F.

Moreover, the profile 8a and the profile 10a comprise portions 8c and 10c, which are inclined with respect to the axis A, in particular incident with respect to the axis A. Furthermore, the portions 8c and 10c are symmetrical with respect to one another relative to the axis A. In particular, the portions 8c and 10c are incident with respect to the axis A, in particular on opposite sides, with a same angle of incidence.

In particular, the respective portions 8c and 10c of the profiles 8a e 10a extend along a respective straight line, in particular incident with the axis A, in particular from opposite sides; in particular, in addition, the angles of incidence of the two respective straight lines with the axis A are equal to each other.

In addition, with reference to figures 2, 3 and 5, the projection 6 comprises a face 6a, in particular facing in the main direction of rotation F, and the projection 7 comprises a face 7a, in particular facing in the main direction of rotation F.

In particular, the face 6a is distinct from the cutting portion 8 and/or from the profile 8a and/or from the cutting portion 9 and/or from the profile 9a.

In particular, the face 7a is distinct from the cutting portion 9 and/or from the profile 9a and/or from the cutting portion 10 and/or from the profile 10a.

The surface of extension of the face 7a is larger than the surface of extension of the face 6a.

Furthermore, the face 6a extends over a width 6b (figure 5) measured along a direction perpendicular to the plane P and/or to the axis A. The face 7a extends over a width 7b (figure 5) measured in a direction perpendicular to the plane P and/or to the axis A. In particular, the width 7b is greater than the width 6b.

Moreover, the ratio between the width 7b and the width 6b ranges from 1.12 to 1.92, preferably from 1.32 to 1.72, in particular from 1.42 to 1.62.

The profile 10a of the cutting portion 10 has a curved shape, in particular facing in the direction contrary to the direction of rotation F, in particular facing in the secondary direction of rotation R.

With reference to figure 5, the profile 10a describes a cusp or a V.

In other words, the cutting portion 10 forms an edge with a rounded tip coinciding with the plane P.

With reference to figure 5, the cutting portion 10 is symmetrical relative to the plane P.

In particular, the cutting portion 10 is facing in the secondary direction of rotation R.

In particular, the cutting portion 8 and the cutting portion 10 are facing in two different directions of rotation.

In particular, the cutting portion 8 and the cutting portion 10 have opposite orientations each other with respect to the main direction of rotation F or the secondary direction of rotation R.

In particular, the cutting portion 9 and the cutting portion 10 are facing in two different directions of rotation each other.

In particular, the cutting portion 9 and the cutting portion 10 have two opposite orientations each other with respect to the main direction of rotation F or the secondary direction of rotation R.

Furthermore, with reference to figures 2 and 3, the projection 6 has a curved shape facing forward (relative to the direction of rotation F) at a certain angle having a value ranging from 0.5° to 3.5°, in particular from 1° to 3° .

With reference to figure 5, the projection 6 has a thickness measured along an axis perpendicular to the plane P and/or to the axis A, which is variable along an axis lying on the plane P and perpendicular to the axis A; in particular, the thickness of the projection 6 increases moving along said axis and, in particular, moving from the profile 8a to the profile 10a; as a consequence, a smaller thickness of the projection 6 sinks first into the snowpack and said thickness increases as the tooth 3 penetrates the snowpack.

In particular, the ratio between the maximum thickness and the minimum thickness of the projection 6 ranges from 1.05 to 1.6, in particular from 1.1 to 1.5, preferably from 1.2 to 1.4, in particular is equal to 1.35.

With reference to figure 5, the projection 7 has a width measured along an axis perpendicular to the plane P and/or to the axis A, which is variable along an axis lying on the plane P and perpendicular to the axis A; in particular, the thickness increases moving along said axis and, in particular, moving from the profile 10a to the profile 8a.

As a consequence, when the tooth 3 rotates in the main direction of rotation F, a greater thickness of the projection 7 sinks first into the snowpack and said thickness decreases as the tooth 3 penetrates the snowpack, when it rotates in the main direction of rotation F.

Furthermore, when the tooth 3 rotates in the secondary direction of rotation R, a smaller thickness of the projection 7 sinks first into the snowpack and said thickness increases as the tooth 3 penetrates the snowpack, when it rotates in the secondary direction of rotation R.

In particular, the ratio between the maximum thickness and the minimum thickness of the projection 7 ranges from 1.05 to 1.6, in particular from 1.1 to 1.5, preferably from 1.2 to 1.4, in particular is equal to 1.25.

Furthermore, the minimum thickness of the projection 7 measured along a direction perpendicular to the axis A and to the plane P is greater than the minimum thickness of the projection 6 measured along the same direction.

Furthermore, the maximum thickness of the projection 7 measured along a direction perpendicular to the axis A and to the plane P is greater than the maximum thickness of the projection 6.

Thanks to this invention, the consumption for tilling a snowpack decreases and there are less oscillations of the tiller, in particular under adverse working conditions, for instance with hard or powdery snow.

Basically, thanks to the invention, those oscillations occurring during snow tilling are reduced, especially under bad working conditions.

Furthermore, snow tilling performances improve in all snow conditions; in other words, these tiller teeth have the ability to adapt themselves to all snow conditions, so as to have better tilling results in all conditions, always using the same tiller teeth and with no need to change the tiller teeth or the tiller itself depending on the snow conditions. As already mentioned above, this is due, first of all, to the height difference of the two projections of each tooth and, secondly, to the thickness difference of the projections of each tooth. Furthermore, thanks to these inventive features, both the tilling consumption and the tilling power decrease, especially under difficult working conditions.

Finally, thanks to the profile 10a, a good snow tilling is obtained even when the tiller rotates in a counterclockwise direction.

The invention also applies to embodiments that are not explicitly described in the detailed description and/or to equivalent embodiments defined by the scope of protection of the appended claims.

## Claims

1. A snow tooth for a snow tiller for preparing the snowpack of ski slopes; the snow tooth (3) comprising a first projection (6) having a first height (H1; R1) and a second projection (7) having a second height (H2; R2), the first height (H1; R1) and the second height (H1; R1) having respective values different between them; the snow tooth (3) being shaped to be connected to a rotating shaft (2) and having, in use, a main direction of rotation (F); preferably the first projection (6) is arranged along the snow tooth (3) so that, in use, it sinks into the snowpack before the second projection (7) in particular when, in use, the snow tooth (3) is attached to a shaft (2) of the snow tiller (1) and said shaft (2) rotates in the main direction of rotation (F) .

2. The snow tooth of claim 1, wherein the snow tooth (3) is symmetrical with respect to a plane (P) of symmetry and extends in height along a first axis (A) that lies on the plane (P); wherein the first projection (6) and the second projection (7) have respective thicknesses measured along a direction perpendicular to the plane (P) and the first axis (A) that vary along an axis that lies on the plane (P) and is perpendicular to the first axis (A); in particular the thickness of the first projection (6) varies so that when, in use, the snow pick (3) rotates according to the main direction of rotation (F) the thickness that sinks into the snowpack increases during rotation in particular the thickness of the second projection (7) varies so that when, in use, the snow tooth (3) rotates in accordance with a secondary direction of rotation (R) opposite to the main direction of rotation (F) the thickness that sinks into the snowpack increases during rotation; in particular the ratio between the maximum thickness and the minimum thickness of each projection is in the range from 1.05 to 1.6, particularly from 1.1 to 1.5, preferably from 1.2 to 1.4.

3. The snow tooth of claim 1, further comprising a first cutting portion (8) and a second cutting portion (9) wherein the first cutting portion (8) has a first profile (8a) and at least part of said first profile (8a) has a first angle of curvature (8b); the second cutting portion (9) has a second profile (9a) and at least part of said second profile has a second angle of curvature (9b); wherein the first and second curvature angles (8b, 9b) have different values from each other, in particular the first curvature angle (8b) has a greater value than the second curvature angle (9b), preferably the ratio of the first curvature angle (8b) to the second curvature angle (9b) is in the range from 3 to 4.9, particularly from 3.7 to 4.2; preferably the first cutting portion (8) and the second cutting portion (9) are facing in the same direction of rotation, in particular are facing in the main direction of rotation (F); preferably the first cutting portion (8) and the second cutting portion (9) have the same orientation with respect to the main direction of rotation (F) .

4. The snow tooth of claim 3, further comprising a third cutting portion (10); wherein the third cutting portion (10) has a third profile (10a) and at least part of said first profile has a third angle of curvature (10b); wherein the third angle of curvature (10b) has a value different from the first angle of curvature (8b) and the second angle of curvature (9b); wherein the third angle of curvature (10b) has a value greater than or equal to the first angle of curvature (8b) and greater than the second angle of curvature (9b); wherein the ratio of the third angle of curvature (10b) to the first angle of curvature (8b) is in the range of 1 to 1.7, preferably 1 to 1.3; in particular, the ratio of the third angle of curvature (10b) to the second angle of curvature (9b) is within the range of 3.5 to 5.2, preferably 4.1 to 4.6; preferably the first cutting portion (8) and the third cutting portion (10) are facing in two different directions of rotation, in particular the first cutting portion (8) is facing in the main direction of rotation (F) and the third cutting portion (10) is facing in the secondary direction of rotation (R) ; preferably the first cutting portion (8) and the third cutting portion (10) have opposite orientations between them with respect to the main direction of rotation (F) or the secondary direction of rotation (R).

5. The snow tooth of any one of the preceding claims, comprising a first cutting portion (8) and a second cutting portion (9); wherein the first cutting portion (8) and the second cutting portion (9) are separated by the first projection (6), particularly in use the first cutting portion (8) sinks into the snowpack before the second cutting portion (9) when the snow tooth rotates in accordance with the main direction of rotation (F); preferably the first cutting portion (8) the second cutting portion (9) are facing in the same direction of rotation, in particular are facing in the main direction of rotation (F); preferably the first cutting portion (8) and the second cutting portion (9) have the same orientation with respect to the main direction of rotation (F) .

6. The snow tooth of any one of the preceding claims, further comprising a second cutting portion (9) and a third cutting portion (10); wherein the second cutting portion (9) and the third cutting portion (10) are separated by the second projection (7), in particular the third cutting portion (10) sinks into the snowpack prior to the second cutting portion (9) when the snow tooth rotates in accordance with the second direction of rotation (R) which is opposite to the first direction of rotation (F); preferably the second cutting portion (9) and the third cutting portion (10) are facing in two different directions of rotation, in particular the second cutting portion (9) is facing in the main direction of rotation (F) and the third cutting portion (10) is facing in the secondary direction of rotation (R); preferably the second cutting portion (9) and the third cutting portion (10) have opposite orientations each other with respect to the main or secondary direction of rotation (F; R).

7. The snow tooth of any one of the preceding claims comprising a base (4), preferably comprising at least a portion describing a circumferential portion for being coupled to the drum of a shaft of a cutter.

8. The snow tooth of claim 7, comprising a central body (5) extending along the first axis (A) from the base (4) and having two cusps (11), one on each side of the plane (P) .

9. The tooth of any one of the preceding claims, wherein the first projection (6) has a first height (H1) measured from the base (4) and the second projection (7) has a second height (H2) measured from the base (4), in particular the first height (H1) being less than the second height (H2), preferably the first height (H1) and the second height (H2) are measured by a line (L) passing through the two lower ends of the base (4), preferably the ratio of the second height (H2) to the first height (H1) is a value greater than 1.0 and less than 1.6, in particular greater than 1.1 and less than 1.3.

10. The tooth of any of the preceding claims, wherein the first projection (6) has the first radial height (R1) and the second projection (7) has a second radial height (R2), in particular the first radial height (R1) being smaller than the second radial height (R1), preferably the first radial height (R1) and the second radial height (R2) measured from the center of the circumference described by the base (4); preferably the first radial height (R1) has a value less than the second radial height (R2), in particular the ratio of the second radial height (R2) to the first radial height (R1) is a value greater than 1.0 and less than 1.3, specifically it is a value greater than 1.01 and less than 1.2, specifically equal to 1.05.

11. The tooth of any one of the preceding claims, wherein the second profile (9a) having a cusp shape or a V shape, in particular symmetrical with respect to the plane (P) .

12. The tooth of any one of the preceding claims, the second profile (9a) having along the plane (P) a curved shape, in particular a crescent shape extending for a value greater than or equal to 170° and less than or equal to 210°, preferably greater than or equal to 180° and less than or equal to 200°.

13. The tooth of any one of the preceding claims, wherein the first profile (8a) and the third profile (10a) comprise respective portions (8c and 10c) that are inclined with respect to the axis (A), in particular incident with respect to the axis (A); said respective portions (8c and 10c) are symmetrical with respect to each other with respect to the axis (A), in particular, said respective portions (8c and 10c) are incident with respect to the axis (A), in particular from opposite sides, with an angle of incidence equal to each other; in particular the respective portions (8c e 10c) of the first profile (8a) and the third profile (10a) extend along a respective straight line, in particular incident with the axis A, in particular from opposite sides; preferably the angles of incidence of the two respective straight lines with the axis (A) are equal to each other.

14. Tooth of any one of the preceding claims, wherein the first projection (6) comprises a first face (6a), particularly perpendicular to the plane (P) and preferably facing the main direction of rotation (F), and the second projection (7) comprises a second face (7a) preferably facing the main direction of rotation (F); wherein the extension surface of the second face (7a) is greater than the extension surface of the first face (6a); preferably the first face (6a) is distinct from the first cutting portion (8) and/or from the first profile (8a); preferably the second face (7a) is distinct from the second cutting portion (9) and/or from the second profile (9a).

15. Tooth of any of the preceding claims, wherein the first projection (6) comprises a first face (6a) in particular perpendicular to the plane (P) and preferably facing the main direction of rotation (F), and the second projection (7) comprises a second face (7a) preferably facing the main direction of rotation (F); wherein the first face (6a) extends for a width (6b) in particular measured along a direction perpendicular to the plane (P) and/or the axis (A); wherein the second face (7a) extends for a width (7b) in particular measured along a direction perpendicular to the plane (P) and/or the axis (A); wherein the second width (7b) is greater than the first width (6b); preferably the first face (6a) is distinct from the first cutting portion (8) and/or from the first profile (8a); preferably the second face (7a) is distinct from the second cutting portion (9) and/or from the second profile (9a).

16. Snow tiller comprising a shaft (2), in rotational use, and preferably having a circular cross-section in particular at least partially hollow; and a plurality of snow teeth (3) according to any one of the preceding claims housed around the shaft (2) and attached thereon and around it.
